# EUROPEAN PATENT APPLICATION

(11) **EP 4 191 160 A1**
(43) Date of publication of application: **07.06.2023**
(21) Application number: 21850483.5
(22) Date of filing: 29.07.2021
(51) Int. Cl.: F25B 1/00, C09K 5/04

(54) **USE OF COMPOSITION AS REFRIGERANT IN DEVICE, DEVICE, AND REFRIGERATION CYCLE DEVICE**

(30) Priority: 31.07.2020 JP 2020131014
(71) Applicant: Daikin Industries, Ltd., Osaka-shi, Osaka 530-0001 (JP)
(72) Inventor: YOTSUMOTO, Yuuki, Osaka-shi, Osaka 530-001 (JP); USUI, Takashi, Osaka-shi, Osaka 530-001 (JP)
(74) Representative: Hoffmann Eitle
(86) International application number: PCT/JP2021/028148
(87) International publication number: WO 2022/025202

(57) **Abstract**

The propagation of a disproportionation reaction of a refrigerant is suppressed. Disclosed is the use of a composition as a refrigerant in a compressor (21), in which the composition includes one or more compounds selected from the group consisting of ethylene-based fluoroolefins, 2,3,3,3-tetrafluoropropene (HFO-1234yf), and 1,3,3,3-tetrafluoropropene (HFO-1234ze), the compressor (21) forms a refrigerant circuit (10) together with first to ninth refrigerant pipes (11 to 19), a gas-side refrigerant communication pipe (5), and a liquid-side refrigerant communication pipe (6), and the compressor (21) includes first to fifth heat absorbing portions (51, 52, 53, 54, 55) in each of which a heat capacity of a portion with a melting point greater than or equal to 1,000°C is greater than or equal to 6.5 J/K.

## Description

### TECHNICAL FIELD

The present disclosure relates to the use of a composition as a refrigerant in a device, the device, and a refrigeration cycle apparatus.

### BACKGROUND ART

Conventionally, hydrofluoroolefins (HFO refrigerants) having lower global warming potential (hereinafter also simply referred to as GWP) than HFC refrigerants have attracted attention for refrigeration apparatuses. For example, 1,2-difluoroethylene (HFO-1132) is considered as a refrigerant with low GWP in Patent Literature 1 (Japanese Patent Laid-Open No. 2019-196312).

### SUMMARY OF THE INVENTION

### <Technical Problem>

Although such HFO refrigerants have low GWP, they are not stable. Thus, some of such HFO refrigerants are likely to undergo a self-decomposition reaction called a disproportionation reaction under given conditions. The disproportionation reaction is a chemical reaction in which two or more molecules of the same type mutually react, for example, to convert into substances of two or more different types. Such a disproportionation reaction of the HFO refrigerants may propagate in some cases.

An object of the present disclosure is to suppress the propagation of a disproportionation reaction of a refrigerant.

### <Solution to Problem>

The inventors of the present application have conducted concentrated studies to suppress the propagation of a disproportionation reaction of a refrigerant, and newly found that the propagation of a disproportionation reaction of a refrigerant can be suppressed by using a heat absorbing portion with a high heat capacity. The inventors of the present application have conducted further research based on such findings to arrive at the present disclosure. The present disclosure provides the use of a composition as a refrigerant in a device, the device, and a refrigeration cycle apparatus according to the following aspects.

The use according to a first aspect is the use of a composition as a refrigerant in a device. The composition includes one or more compounds selected from the group consisting of ethylene-based fluoroolefins, 2,3,3,3-tetrafluoropropene (HFO-1234yf), and 1,3,3,3-tetrafluoropropene (HFO-1234ze). The device forms a refrigerant circuit together with a refrigerant pipe. The device includes a heat absorbing portion. In the heat absorbing portion, the heat capacity of a portion with a melting point greater than or equal to 1,000°C is greater than or equal to 6.5 J/K.

Though not limited, the device may be a compressor, or a control valve, such as an expansion valve or a selector valve.

The heat absorbing portion may include a single member or a plurality of members.

According to such use, it is possible to, even when a disproportionation reaction has occurred in the device, suppress the propagation of the disproportionation reaction.

The use according to a second aspect is the use according to the first aspect, in which the composition includes one or more compounds selected from the group consisting of 1,2-difluoroethylene (HFO-1132), 1,1-difluoroethylene (HFO-1132a), 1,1,2-trifluoroethylene (HFO-1123), monofluoroethylene (HFO-1141), and perhaloolefins.

Note that 1,2-difluoroethylene may be trans-1,2-difluoroethylene [(E)-HFO-1132], cis-1,2-difluoroethylene [(Z)-HFO-1132], or a mixture of them.

The use according to a third aspect is the use according to the second aspect, in which the composition includes 1,2-difluoroethylene (HFO-1132) and/or 1,1,2-trifluoroethylene (HFO-1123).

A device according to a fourth aspect is a device for using a composition as a refrigerant. The composition includes one or more compounds selected from the group consisting of ethylene-based fluoroolefins, 2,3,3,3-tetrafluoropropene (HFO-1234yf), and 1,3,3,3-tetrafluoropropene (HFO-1234ze). The device forms a refrigerant circuit together with a refrigerant pipe. The device includes a heat absorbing portion. In the heat absorbing portion, the heat capacity of a portion with a melting point greater than or equal to 1,000°C is greater than or equal to 6.5 J/K.

Though not limited, the device may be a compressor, or a control valve, such as an expansion valve or a selector valve.

The heat absorbing portion may include a single member or a plurality of members.

Such a device can, even when a disproportionation reaction of a refrigerant has occurred in the device, suppress the propagation of the disproportionation reaction.

A refrigeration cycle apparatus according to a fifth aspect includes a refrigerant circuit. The refrigerant circuit includes the device according to the fourth aspect and the refrigerant pipe.

Such a refrigeration cycle apparatus can suppress the propagation of a disproportionation reaction of a refrigerant circulating through the refrigerant circuit.

### BRIEF DESCRIPTION OF THE DRAWINGS

Figure 1 is a schematic configuration diagram of a refrigeration cycle apparatus.
Figure 2 is a block configuration diagram of the refrigeration cycle apparatus.
Figure 3 is a side cross-sectional view illustrating a schematic configuration of a compressor.
Figure 4 is a plan cross-sectional view illustrating a region around a cylinder chamber of the compressor.
Figure 5 is a schematic view illustrating an instrument used in a test related to the relationship between the propagation of a disproportionation reaction and a heat capacity.

### DESCRIPTION OF EMBODIMENTS

Hereinafter, the use of a composition as a refrigerant in a device, the device, and a refrigeration cycle apparatus according to the present disclosure will be specifically described with reference to examples. However, the following description is not intended to limit the present disclosure.

### (1) Refrigeration cycle apparatus 1

A refrigeration cycle apparatus 1 is an apparatus for performing vapor-compression refrigeration cycles to process a heat load of a target space. For example, the refrigeration cycle apparatus 1 is an air-conditioning apparatus for conditioning air in a target space.

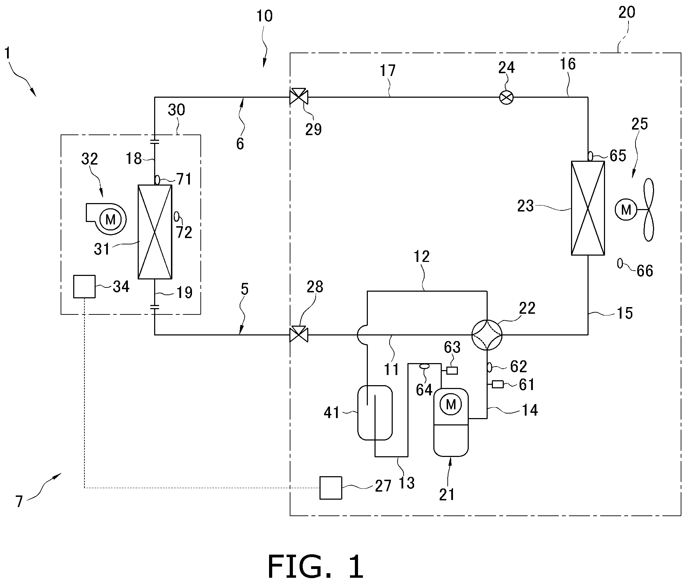

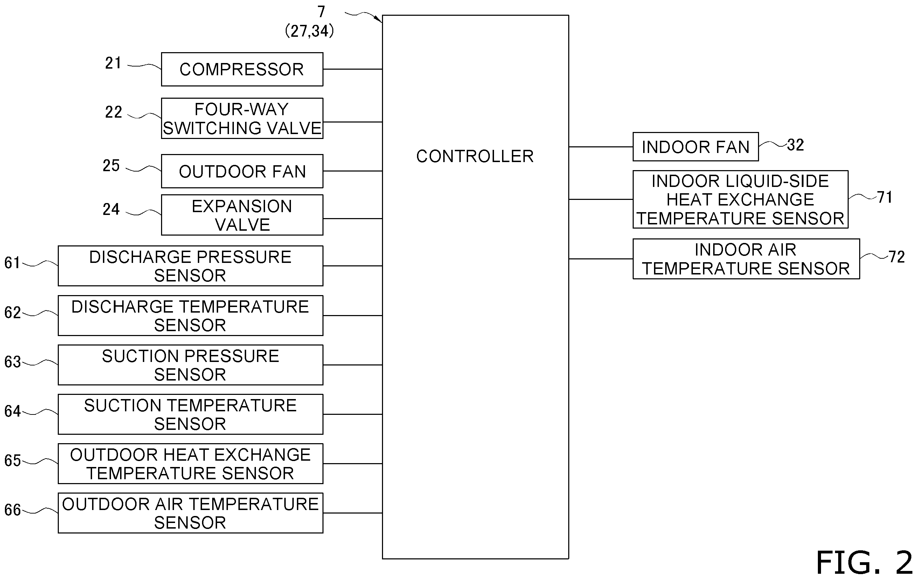

Figure 1 is a schematic configuration diagram of the refrigeration cycle apparatus. Figure 2 is a block configuration diagram of the refrigeration cycle apparatus.

The refrigeration cycle apparatus 1 mainly includes an outdoor unit 20; an indoor unit 30; a liquid-side refrigerant communication pipe 6 and a gas-side refrigerant communication pipe 5 each connecting the outdoor unit 20 and the indoor unit 30; a remote controller (not illustrated); and a controller 7 that controls the operation of the refrigeration cycle apparatus 1.

In the refrigeration cycle apparatus 1, refrigeration cycles are performed such that a refrigerant enclosed in a refrigerant circuit 10 is compressed, and is then cooled or condensed, and is then decompressed, and is then heated or evaporated, and is then compressed again. In the present embodiment, the refrigerant circuit 10 is filled with a refrigerant for performing vapor-compression refrigeration cycles.

### (2) Refrigerant

Examples of the refrigerant filling the refrigerant circuit 10 include one or more compounds selected from the group consisting of ethylene-based fluoroolefins, 2,3,3,3-tetrafluoropropene (HFO-1234yf), and 1,3,3,3-tetrafluoropropene (HFO-1234ze). Note that regarding the burning velocity defined by the ISO 817, 1,3,3,3-tetrafluoropropene (HFO-1234ze) with a burning velocity of 1.2 cm/s is more preferable than 2,3,3,3-tetrafluoropropene (HFO-1234yf) with a burning velocity of 1.5 cm/s. Regarding the LFL (Lower Flammability Limit) defined by the ISO 817, 1,3,3,3-tetrafluoropropene (HFO-1234ze) with a LFL of 65000 vol.ppm or 6.5% is more preferable than 2,3,3,3-tetrafluoropropene (HFO-1234yf) with a LFL of 62000 vol.ppm or 6.2%. In particular, the refrigerant may include one or more compounds selected from the group consisting of 1,2-difluoroethylene (HFO-1132), 1,1-difluoroethylene (HFO-1132a), 1,1,2-trifluoroethylene (HFO-1123), monofluoroethylene (HFO-1141), and perhaloolefins. Above all, the refrigerant, including 1,2-difluoroethylene (HFO-1132) and/or 1,1,2-trifluoroethylene (HFO-1123), is preferable.

Herein, examples of ethylene-based fluoroolefins include 1,2-difluoroethylene (HFO-1132), 1,1-difluoroethylene (HFO-1132a), 1,1,2-trifluoroethylene (HFO-1123), monofluoroethylene (HFO-1141), and perhaloolefins. Examples of perhaloolefins include chlorotrifluoroethylene (CFO-1113) and tetrafluoroethylene (FO-1114).

Note that the refrigerant circuit 10 is also filled with refrigerator oil together with the aforementioned refrigerant.

### (3) Outdoor unit 20

The outdoor unit 20 is connected to the indoor unit 30 via the liquid-side refrigerant communication pipe 6 and the gas-side refrigerant communication pipe 5, and consists part of the refrigerant circuit 10. The outdoor unit 20 mainly includes a compressor 21, a four-way switching valve 22, an outdoor heat exchanger 23, an expansion valve 24, an outdoor fan 25, a receiver 41, a gas-side shut-off valve 28, a liquid-side shut-off valve 29, and a first refrigerant pipe 11 to a seventh refrigerant pipe 17.

The compressor 21 is a device that compresses a low-pressure refrigerant in a refrigeration cycle up to a high pressure. Herein, the compressor 21 may be a hermetic compressor in which a rotary-type or scroll-type positive-displacement compression element is rotationally driven by a compressor motor. In the present embodiment, a rotary compressor is used. The compressor motor is used to change the volume, and its operating frequency can be controlled with an inverter. The third refrigerant pipe 13 including a suction pipe 99 is connected to the suction side of the compressor 21. The first refrigerant pipe 11, which is a discharge pipe, is connected to the discharge side of the compressor 21.

The four-way switching valve 22 is a valve that switches a flow channel as the movement of its valve element (not illustrated) is controlled, and is a valve that switches the refrigerant circuit 10 between a cooling connection state and a heating connection state. Specifically, in the cooling connection state, the four-way switching valve 22 is switched to a state of connecting the fourth refrigerant pipe 14 including a discharge pipe 95 connected to the discharge side of the compressor 21 and the fifth refrigerant pipe 15 connected to the outdoor heat exchanger 23, and connecting the third refrigerant pipe 13 connected to the suction side of the compressor 21, the receiver 41, the second refrigerant pipe 12, and the first refrigerant pipe 11 connected to the gas-side shut-off valve 28. Meanwhile, in the heating connection state, the four-way switching valve 22 is switched to a state of connecting the fourth refrigerant pipe 14 connected to the discharge side of the compressor 21 and the first refrigerant pipe 11 connected to the gas-side shut-off valve 28, and connecting the third refrigerant pipe 13 connected to the suction side of the compressor 21, the receiver 41, the second refrigerant pipe 12, and the fifth refrigerant pipe 15 connected to the outdoor heat exchanger 23.

The outdoor heat exchanger 23 is a heat exchanger that functions as a heat radiator or condenser for a high-pressure refrigerant in a refrigeration cycle during the cooling operation, and functions as an evaporator for a low-pressure refrigerant in a refrigeration cycle during the heating operation. The gas-side end portion of the outdoor heat exchanger 23 is connected to the four-way switching valve 22 via the fifth refrigerant pipe 15. The liquid-side end portion of the outdoor heat exchanger 23 is connected to the expansion valve 24 via the sixth refrigerant pipe 16.

The expansion valve 24 is provided between the liquid-side outlet of the outdoor heat exchanger 23 and the liquid-side shut-off valve 29 in the refrigerant circuit 10. The expansion valve 24 is a motor-operated expansion valve with an opening degree that is adjustable as the movement of its valve element (not illustrated) relative to a valve seat (not illustrated) is controlled. The expansion valve 24 and the liquid-side shut-off valve 29 are connected via the seventh refrigerant pipe 17.

The outdoor fan 25 produces an air flow for causing outdoor air to be sucked into the outdoor unit 20, and causing the sucked air to exchange heat with a refrigerant in the outdoor heat exchanger 23, and then causing the air to be discharged to the outside. The outdoor fan 25 is rotationally driven by an outdoor fan motor.

The receiver 41 is a refrigerant container that is provided between the suction side of the compressor 21 and one of connection ports of the four-way switching valve 22, and that can store an excess refrigerant in the refrigerant circuit 10 as a liquid refrigerant. The inlet side of the receiver 41 is connected to the four-way switching valve 22 via the second refrigerant pipe 12. The outlet side of the receiver 41 is connected to the suction side of the compressor 21 via the third refrigerant pipe 13.

The liquid-side shut-off valve 29 is a manual valve disposed at a portion of the outdoor unit 20 connected to the liquid-side refrigerant communication pipe 6.

The gas-side shut-off valve 28 is a manual valve disposed at a portion of the outdoor unit 20 connected to the gas-side refrigerant communication pipe 5.

The outdoor unit 20 includes an outdoor unit controller 27 that controls the operation of each portion forming the outdoor unit 20. The outdoor unit controller 27 has a microcomputer including a CPU and a memory, for example. The outdoor unit controller 27 is connected to an indoor unit controller 34 of each indoor unit 30 via a communication line, and transmits and receives control signals, for example.

The outdoor unit 20 is provided with a discharge pressure sensor 61, a discharge temperature sensor 62, a suction pressure sensor 63, a suction temperature sensor 64, an outdoor heat exchange temperature sensor 65, and an outdoor air temperature sensor 66, for example. Each of such sensors is electrically connected to the outdoor unit controller 27, and transmits a detection signal to the outdoor unit controller 27. The discharge pressure sensor 61 detects the pressure of a refrigerant flowing through a discharge pipe that connects the discharge side of the compressor 21 and one of the connection ports of the four-way switching valve 22. The discharge temperature sensor 62 detects the temperature of the refrigerant flowing through the discharge pipe. The suction pressure sensor 63 detects the pressure of a refrigerant flowing through a suction pipe that connects the suction side of the compressor 21 and the receiver 41. The suction temperature sensor 64 detects the temperature of the refrigerant flowing through the suction pipe. The outdoor heat exchange temperature sensor 65 detects the temperature of a refrigerant flowing through the liquid-side outlet of the outdoor heat exchanger 23 on the side opposite to the side connecting to the four-way switching valve 22. The outdoor air temperature sensor 66 detects the temperature of outdoor air before it passes through the outdoor heat exchanger 23.

### (4) Indoor unit 30

The indoor unit 30 is disposed on an indoor wall surface or ceiling as a target space, for example. The indoor unit 30 is connected to the outdoor unit 20 via the liquid-side refrigerant communication pipe 6 and the gas-side refrigerant communication pipe 5, and consists part of the refrigerant circuit 10.

The indoor unit 30 includes an indoor heat exchanger 31, an eighth refrigerant pipe 18, a ninth refrigerant pipe 19, and an indoor fan 32.

The indoor heat exchanger 31 is connected at its liquid-side end to the liquid-side refrigerant communication pipe 6 via the eighth refrigerant pipe 18, and is connected at its gas-side end to the gas-side refrigerant communication pipe 5 via the ninth refrigerant pipe 19. The indoor heat exchanger 31 is a heat exchanger that functions as an evaporator for a low-pressure refrigerant in a refrigeration cycle during the cooling operation, and functions as a condenser for a high-pressure refrigerant in a refrigeration cycle during the heating operation.

The indoor fan 32 produces an air flow for causing indoor air to be sucked into the indoor unit 30, and causing the sucked air to exchange heat with a refrigerant in the indoor heat exchanger 31, and then causing the air to be discharged to the outside. The indoor fan 32 is rotationally driven by an indoor fan motor.

The indoor unit 30 includes the indoor unit controller 34 that controls the operation of each unit forming the indoor unit 30. The indoor unit controller 34 includes a microcomputer including a CPU and a memory, for example. The indoor unit controller 34 is connected to the outdoor unit controller 27 via the communication line, and transmits and receives control signals, for example.

The indoor unit 30 is provided with an indoor liquid-side heat exchange temperature sensor 71 and an indoor air temperature sensor 72, for example. Each of such sensors is electrically connected to the indoor unit controller 34, and transmits a detection signal to the indoor unit controller 34. The indoor liquid-side heat exchange temperature sensor 71 detects the temperature of a refrigerant flowing through the liquid-refrigerant-side outlet of the indoor heat exchanger 31. The indoor air temperature sensor 72 detects the temperature of indoor air before it passes through the indoor heat exchanger 31.

### (5) Controller 7

In the refrigeration cycle apparatus 1, the outdoor unit controller 27 and the indoor unit controller 34 are connected via the communication line, thus forming the controller 7 that controls the operation of the refrigeration cycle apparatus 1.

The controller 7 mainly includes a CPU (central processing unit) and a memory, such as ROM and RAM. Note that various processes and control performed by the controller 7 are implemented as the portions included in the outdoor unit controller 27 and/or the indoor unit controller 34 function in an integrated manner.

### (6) Operation modes

The refrigeration cycle apparatus 1 can execute at least a cooling operation mode and a heating operation mode.

The controller 7 determines, whether the instruction indicates the cooling operation mode or the heating operation mode, based on an instruction received from the remote controller or the like, and executes the mode.

In the cooling operation mode, the operating frequency of the compressor 21 is controlled to control the volume so that the evaporating temperature of the refrigerant in the refrigerant circuit 10 reaches a target evaporating temperature, for example.

The gaseous refrigerant discharged from the compressor 21 is condensed in the outdoor heat exchanger 23 via the four-way switching valve 22. The refrigerant that has flowed through the outdoor heat exchanger 23 is decompressed while passing through the expansion valve 24.

The refrigerant decompressed in the expansion valve 24 flows through the liquid-side refrigerant communication pipe 6 via the liquid-side shut-off valve 29, and is then sent to the indoor unit 30. After that, the refrigerant evaporates in the indoor heat exchanger 31, and then flows into the gas-side refrigerant communication pipe 5. The refrigerant that has flowed through the gas-side refrigerant communication pipe 5 is sucked into the compressor 21 again via the gas-side shut-off valve 28, the four-way switching valve 22, and the receiver 41.

In the heating operation mode, the operating frequency of the compressor 21 is controlled to control the volume so that the condensation temperature of the refrigerant in the refrigerant circuit 10 reaches a target condensation temperature, for example.

The gaseous refrigerant discharged from the compressor 21 flows through the four-way switching valve 22 and the gas-side refrigerant communication pipe 5, and then flows into the gas-side end of the indoor heat exchanger 31 of the indoor unit 30 so that the refrigerant is condensed or is allowed to radiate heat in the indoor heat exchanger 31. The refrigerant, which has been condensed or has been allowed to radiate heat in the indoor heat exchanger 31, flows through the liquid-side refrigerant communication pipe 6, and then flows into the outdoor unit 20.

The refrigerant that has passed through the liquid-side shut-off valve 29 of the outdoor unit 20 is decompressed in the expansion valve 24. The refrigerant that has been decompressed in the expansion valve 24 evaporates in the outdoor heat exchanger 23, and is sucked into the compressor 21 again via the four-way switching valve 22 and the receiver 41.

### (7) Detailed configuration of compressor 21

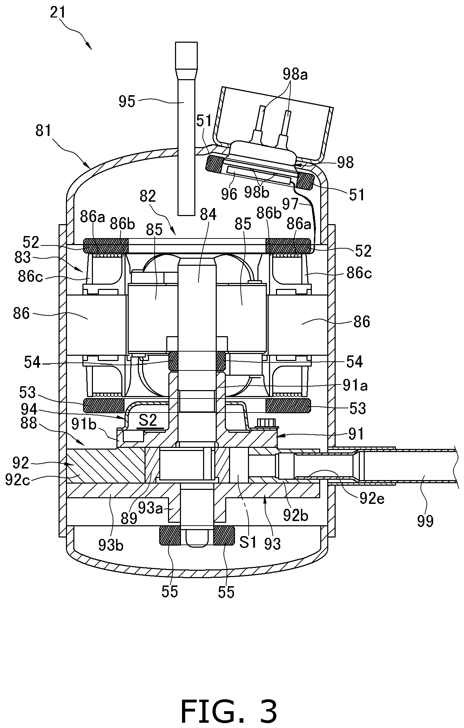

The compressor 21 of the present embodiment is a one-cylinder rotary compressor as illustrated in Figure 3, and is a rotary compressor including a casing 81 as well as a drive mechanism 82 and a compression mechanism 88 disposed in the casing 81. In the compressor 21, the compression mechanism 88 is disposed below the drive mechanism 82 in the casing 81.

### (7-1) Drive mechanism

The drive mechanism 82 is housed in the upper part of the internal space of the casing 81, and drives the compression mechanism 88. The drive mechanism 82 includes a motor 83 as a drive source, and a crankshaft 84 as a drive shaft attached to the motor 83.

The motor 83 is a motor for rotationally driving the crankshaft 84, and mainly includes a rotor 85 and a stator 86. The rotor 85 has the crankshaft 84 fit-inserted in its internal space, and rotates together with the crankshaft 84. The rotor 85 includes laminated electromagnetic steel plates and a magnet embedded in a rotor body. The stator 86 is disposed radially outward of the rotor 85 with a predetermined space from the rotor 85. The stator 86 is disposed while being divided into a plurality of sections at predetermined intervals in the circumferential direction. That is, the stator 86 includes a plurality of sections provided in the circumferential direction each including laminated electromagnetic steel plates and a coil 86a wound around a stator body 86c having teeth 86b. In the motor 83, the rotor 85 is caused to rotate together with the crankshaft 84 with an electromagnetic force that is generated in the stator 86 as a current is passed through the coil 86a. The upper side of the upper end portion of the coil 86a is provided with a second heat absorbing member 52 formed in a ring shape so as to cover the upper end portion of the coil 86a from above. The lower side of the lower end portion of the coil 86a is provided with a third heat absorbing member 53 formed in a ring shape so as to cover the lower end portion of the coil 86a from below. Each of the shortest distance between the upper end portion of the coil 86a and the second heat absorbing member 52 and the shortest distance between the lower end portion of the coil 86a and the third heat absorbing member 53 is not limited, but may be less than or equal to 5 cm, for example, and is preferably less than or equal to 3 cm. Each of the second heat absorbing member 52 and the third heat absorbing member 53 is a metal member with a melting point greater than or equal to 1,000°C and a heat capacity greater than or equal to 6.5 J/K.

Herein, the upper end of the casing 81 is provided with a terminal portion 98 for supplying power to the compressor 21 from outside. The coil 86a of the stator 86 is supplied with power via a cluster 96 as a connection member, which is connected to the terminal portion 98 from the inside of the casing 81, and an electric wire 97 extending from the cluster 96.

The terminal portion 98 includes, as terminal pins, a plurality of outer pins 98a extending to the outside of the casing 81, and a plurality of inner pins 98b extending to the inside of the casing 81. The cluster 96 has an approximately rectangular parallelepiped shape. The external profile of the cluster 96 is formed of resin. A face of the cluster 96 on the side of the terminal portion 98 is provided with portions for receiving the plurality of inner pins 98b of the terminal portion 98. In a state where the cluster 96 is coupled to the plurality of inner pins 98b of the terminal portion 98, a gap is produced between the face of the cluster 96 on the side of the terminal portion 98 and a root portion of the casing 81 from which the plurality of inner pins 98b extend. A refrigerant is present in the gap including a region around the plurality of inner pins 98b of the casing 81. A first heat absorbing member 51 with an approximately rectangular shape is provided so as to surround the gap. The shortest distance between the inner pins 98b and the first heat absorbing member 51 is not limited, but may be less than or equal to 5 cm, for example, and is preferably less than or equal to 3 cm. The first heat absorbing member 51 is a metal member with a melting point greater than or equal to 1,000°C and a heat capacity greater than or equal to 6.5 J/K. In such a configuration, when the compressor 21 is supplied with power from outside while driven, a current flows through the plurality of outer pins 98a and the plurality of inner pins 98b of the terminal portion 98; the electric wire 97; and the coil 86a.

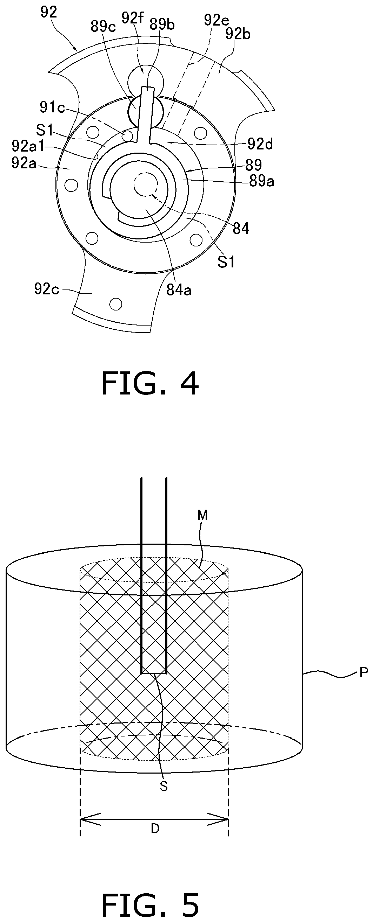

The crankshaft 84 is an approximately cylindrical member that is fit-inserted in the rotor 85, and rotates about the rotation axis. As illustrated in Figure 4, a crankpin 84a, which is an eccentric portion of the crankshaft 84, is inserted through a roller 89a (which is described below) of a piston 89 of the compression mechanism 88, and fits in the roller 89a in a state where it can transmit torque from the rotor 85. The crankshaft 84 rotates with the rotation of the rotor 85, and eccentrically rotates the crankpin 84a, thus causing the roller 89a of the piston 89 of the compression mechanism 88 to revolve. That is, the crankshaft 84 has a function of transmitting a drive force of the motor 83 to the compression mechanism 88.

### (7-2) Compression mechanism

The compression mechanism 88 is housed in the lower part of the casing 81. The compression mechanism 88 compresses a refrigerant sucked thereinto via a suction pipe 99. The compression mechanism 88 is a rotary compression mechanism, and mainly includes a front head 91, a cylinder 92, the piston 89, and a rear head 93. A refrigerant compressed in a compression chamber S1 of the compression mechanism 88 is discharged to a space in which the motor 83 is disposed and the lower end of a discharge pipe 95 is located from a front-head discharge hole 91c formed in the front head 91 via a muffler space S2 surrounded by the front head 91 and a muffler 94.

### (7-2-1) Cylinder

The cylinder 92 is a metal cast member. The cylinder 92 includes a cylindrical central portion 92a, a first extension portion 92b extending radially outward from the central portion 92a to one side, and a second extension portion 92c extending from the central portion 92a to a side opposite to the first extension portion 92b. The first extension portion 92b has formed therein a suction hole 92e for sucking a low-pressure refrigerant in a refrigeration cycle. A cylindrical space on the inner side of an inner peripheral face 92a1 of the central portion 92a corresponds to a cylinder chamber 92d into which a refrigerant sucked through the suction hole 92e flows. The suction hole 92e extends from the cylinder chamber 92d to an outer peripheral face of the first extension portion 92b, and is open at the outer peripheral face of the first extension portion 92b. The suction hole 92e has inserted therein the tip end portion of the suction pipe 99. In addition, the cylinder chamber 92d houses the piston 89 for compressing a refrigerant that has flowed into the cylinder chamber 92d, for example.

The cylinder chamber 92d, which is formed by the cylindrical central portion 92a of the cylinder 92, has at its lower end a first end that is open, and has at its upper end a second end that is open. The first end that is the lower end of the central portion 92a is closed by the rear head 93 described below. The second end that is the upper end of the central portion 92a is closed by the front head 91 described below.

The cylinder 92 has formed therein a blade oscillation space 92f in which a bushing 89c and a blade 89b described below are disposed. The blade oscillation space 92f is formed across a region from the central portion 92a to the first extension portion 92b, and the blade 89b of the piston 89 is oscillatably supported on the cylinder 92 via the bushing 89c. The blade oscillation space 92f is formed to extend toward the outer periphery side from the cylinder chamber 92d around the suction hole 92e as seen in plan view.

### (7-2-2) Front head

As illustrated in Figure 3, the front head 91 includes a front-head disc portion 91b that closes the opening at the second end, which is the upper end, of the cylinder 92, and an upper bearing portion 91a extending upward from the peripheral edge of the front-head opening in the center of the front-head disc portion 91b. The upper bearing portion 91a is cylindrical and functions as a bearing for the crankshaft 84.

The inner peripheral face of the upper bearing portion 91a and the outer peripheral face of the crankshaft 84 have a slight gap formed therebetween so as to allow the crankshaft 84 to rotate. The gap has lubricity as refrigerator oil is present in the gap. A ring-shaped fourth heat absorbing member 54 is provided so as to cover the gap from above. The shortest distance between the fourth heat absorbing member 54 and the upper end portion between the inner peripheral face of the upper bearing portion 91a and outer peripheral face of the crankshaft 84 is not limited, but may be less than or equal to 5 cm, for example, and is preferably less than or equal to 3 cm. The fourth heat absorbing member 54 is a metal member with a melting point greater than or equal to 1,000°C and a heat capacity greater than or equal to 6.5 J/K.

The front-head disc portion 91b has formed therein the front-head discharge hole 91c at a plane position illustrated in Figure 4. A refrigerant, which has been compressed in the compression chamber S1 having a variable volume in the cylinder chamber 92d of the cylinder 92, is intermittently discharged through the front-head discharge hole 91c. The front-head disc portion 91b is provided with a discharge valve that opens or closes the outlet of the front-head discharge hole 91c. When pressure in the compression chamber S1 has become higher than pressure in the muffler space S2, the discharge valve is opened due to the pressure difference, thereby causing the refrigerant to be discharged to the muffler space S2 through the front-head discharge hole 91c.

### (7-2-3) Muffler

As illustrated in Figure 3, the muffler 94 is attached to the top face of the peripheral edge portion of the front-head disc portion 91b of the front head 91. The muffler 94 forms the muffler space S2 together with the top face of the front-head disc portion 91b and the outer peripheral face of the upper bearing portion 91a, and attempts to reduce noise generated along with the discharge of a refrigerant. The muffler space S2 and the compression chamber S1 communicate with each other via the front-head discharge hole 91c when the discharge valve is open as described above.

The muffler 94 has formed therein a central muffler opening (not illustrated) for passing the upper bearing portion 91a, and a muffler discharge hole (not illustrated) through which a refrigerant is flowed from the muffler space S2 to a housing space for the motor 83 above the muffler space S2.

Note that the muffler space S2, the housing space for the motor 83, the space where the discharge pipe 95 is located above the motor 83, and a space where lubricating oil accumulates below the compression mechanism 88, for example, are all continuous, and form a high-pressure space with equal pressure.

### (7-2-4) Rear head

The rear head 93 includes a rear-head disc portion 93b that closes the opening at the first end, which is the lower end, of the cylinder 92, and a lower bearing portion 93a as a bearing extending downward from the peripheral edge portion of the opening in the center of the rear-head disc portion 93b. The front-head disc portion 91b, the rear-head disc portion 93b, and the central portion 92a of the cylinder 92 form the cylinder chamber 92d as illustrated in Figure 4. The lower bearing portion 93a axially supports the crankshaft 84 together with the foregoing upper bearing portion 91a.

The inner peripheral face of the lower bearing portion 93a and the outer peripheral face of the crankshaft 84 have a slight gap formed therebetween so as to allow the crankshaft 84 to rotate. The gap has lubricity as refrigerator oil is present in the gap. A ring-shaped fifth heat absorbing member 55 is provided so as to cover the gap from below. The shortest distance between the fifth heat absorbing member 55 and the lower end portion between the inner peripheral face of the lower bearing portion 93a and the outer peripheral face of the crankshaft 84 is not limited, but may be less than or equal to 5 cm, for example, and is preferably less than or equal to 3 cm. The fifth heat absorbing member 55 is a metal member with a melting point greater than or equal to 1,000°C and a heat capacity greater than or equal to 6.5 J/K.

### (7-2-5) Piston

The piston 89 is disposed in the cylinder chamber 92d, and is attached to the crankpin 84a that is the eccentric portion of the crankshaft 84. The piston 89 is a member integrating the roller 89a and the blade 89b. The blade 89b of the piston 89 is disposed in the blade oscillation space 92f formed in the cylinder 92, and is oscillatably supported on the cylinder 92 via the bushing 89c as described above. The blade 89b is slidable on the bushing 89c, and oscillates and also repeatedly moves away from the crankshaft 84 and closer to the crankshaft 84 during operation.

As illustrated in Figure 4, the roller 89a and the blade 89b of the piston 89 form the compression chamber S1, which has a volume variable with the revolution of the piston 89, such that the roller 89a and the blade 89b of the piston 89 partition the cylinder chamber 92d. The compression chamber S1 is a space surrounded by the inner peripheral face 92a1 of the central portion 92a of the cylinder 92, the top face of the rear-head disc portion 93b, the bottom face of the front-head disc portion 91b, and the piston 89. The volume of the compression chamber S1 changes with the revolution of the piston 89 so that a low-pressure refrigerant sucked thereinto through the suction hole 92e is compressed to become a high-pressure refrigerant, and is then discharged to the muffler space S2 through the front-head discharge hole 91c.

### (7-3) Operation

In the foregoing compressor 21, the volume of the compression chamber S1 changes with the movement of the piston 89 of the compression mechanism 88 that revolves with the eccentric rotation of the crankpin 84a. Specifically, first, while the piston 89 starts revolving, a low-pressure refrigerant is sucked into the compression chamber S1 through the suction hole 92e. The volume of the compression chamber S1 facing the suction hole 92e gradually increases while it sucks the refrigerant. When the piston 89 further revolves, the communication state between the compression chamber S1 and the suction hole 92e is canceled so that the refrigerant starts to be compressed in the compression chamber S1. After that, the volume of the compression chamber S1 that communicates with the front-head discharge hole 91c becomes significantly small, and the pressure of the refrigerant therein increases. After that, as the piston 89 further revolves, the refrigerant with the increased pressure pushes and opens the discharge valve through the front-head discharge hole 91c, and thus is discharged to the muffler space S2. The refrigerant introduced into the muffler space S2 is discharged to a space above the muffler space S2 through the muffler discharge hole of the muffler 94. The refrigerant discharged to the outside of the muffler space S2 passes through a space between the rotor 85 and the stator 86 of the motor 83 to cool the motor 83, and is then discharged from the discharge pipe 95.

### (8) Feature of embodiment

In the refrigeration cycle apparatus 1 of the present embodiment, a refrigerant that may undergo a disproportionation reaction is used. Such a disproportionation reaction of the refrigerant occurs with a certain probability under an environment where predetermined high-temperature conditions, high-pressure conditions, and ignition energy conditions are satisfied. Then, the disproportionation reaction may propagate to surrounding regions from the portion where the disproportionation reaction has occurred.

In response, the inventors prepared a test device illustrated in Figure 5 to cause a disproportionation reaction to occur therein, and observed differences in the propagation of the disproportionation reaction while changing the heat capacity of a mesh member provided around the portion where the disproportionation reaction has occurred, for example. The test device mainly included a pressure-resistant container P, an ignition source S, and a mesh member M. The pressure-resistant container P was a container with a cylindrical internal space. The ignition source S was a platinum wire provided to connect two electrodes in the center of the internal space of the pressure-resistant container P. The mesh member M was a mesh-like member with a cylindrical external profile provided to surround the ignition source S from its outer side in the radial direction. The reason for the use of such a mesh-like member was to perform a test while maintaining the same refrigerant pressure inside and outside the mesh member M. The test device was constructed such that the radial dimension of the internal space of the pressure-resistant container P became sufficiently larger than the radial dimension of the mesh member M. The mesh member M was formed by rolling up a mesh-like sheet into a cylindrical shape. In each test example, the size of each opening of the mesh member M was set the same, and an identical SUS mesh-like sheet was used in each of Test Examples 1 to 9, but the number of rolls of the sheet was increased or decreased to change the heat capacity. Each mesh member M was formed to have a radial thickness of about 1 to 3 mm. Herein, the pressure-resistant container P was filled with 1,2-difluoroethylene (HFO-1132) as a refrigerant, and the refrigerant temperature was set to 150°C while the refrigerant pressure was set to 1.5 MPa. The material, diameter D, and heat capacity of the mesh member M were changed and the ignition source S was caused to spark so that it was observed whether the resulting disproportionation reaction had propagated to a portion radially outward of the mesh member M. The test results are indicated below.

In the following table, "Post-Reaction State" indicates the results of visually observing the state of the mesh member M after the disproportionation reaction was caused to occur. "Temperature Rise (°C) Outside Mesh Member" indicates the maximum temperature reached when the disproportionation reaction was caused to occur, and was measured using a temperature sensed with a temperature sensor disposed in the pressure-resistant container P and outside the mesh member M. "Generation of Soot Outside Mesh Member" indicates the results of visually observing the presence or absence of soot stuck to the inner wall surface of the pressure-resistant container P after the disproportionation reaction was caused to occur.

**[Table 1]**

| | Material of Mesh Member | Melting Point (°C) of Mesh Member | Diameter (mm) of Mesh Member | Heat Capacity (J/K) of Mesh Member | Post-Reaction State | Temperature Rise (°C) Outside Mesh Member | Generation of Soot Outside Mesh Member |
|---|---|---|---|---|---|---|---|
| Test Example 1 | SUS | 1400 | 22 | 1.30 | Melted | 462 | Present |
| Test Example 2 | SUS | 1400 | 13 | 0.65 | Melted | 249 | Present |
| Test Example 3 | SUS | 1400 | 13 | 6.73 | Shape Maintained | 150 | Absent |
| Test Example 4 | SUS | 1400 | 13 | 1.91 | Partially Melted | 329 | Present |
| Test Example 5 | SUS | 1400 | 30 | 4.40 | Partially Melted | 303 | Present |
| Test Example 6 | SUS | 1400 | 13 | 3.83 | Partially Melted | 647 | Present |
| Test Example 7 | SUS | 1400 | 30 | 7.42 | Shape Maintained | 150 | Absent |
| Test Example 8 | SUS | 1400 | 22 | 6.49 | Partially Melted | 506 | Present |
| Test Example 9 | SUS | 1400 | 22 | 7.62 | Shape Maintained | 150 | Absent |
| Test Example 10 | Glass Fibers | 840 | 22 | 6.70 | Melted | 612 | Present |

According to the foregoing test results, the mesh member M of Test Example 10, which was made of glass fibers with a melting point as low as 840°C, melted and disappeared when exposed to a high-temperature environment due to the occurrence of a disproportionation reaction. In Test Example 10, a temperature rise of the refrigerant was observed outside a portion where the mesh member M had existed, and soot was observed on the inner peripheral face of the pressure-resistant container P, which demonstrates that it has been impossible to suppress the propagation of the disproportionation reaction.

For the mesh member M of each of Test Examples 1, 2, 4 to 6, and 8, which was made of SUS with a melting point as high as 1,400°C and with an insufficient heat capacity of less than 6.5 J/K, a temperature rise of the refrigerant was observed outside the mesh member M, and soot was observed on the inner peripheral face of the pressure-resistant container P, which demonstrates that it has been impossible to suppress the propagation of the disproportionation reaction. Specifically, the mesh member M of each of Test Examples 1 and 2 with an extremely low heat capacity of 0.65 to 1.30 J/K entirely melted. Meanwhile, the mesh member M of each of Test Examples 4 to 6 and 8 with a relatively low heat capacity of 1.91 to 6.49 J/K partially melted, and the generation of a hole radially penetrating the mesh member M was observed.

Meanwhile, the mesh member M of each of Test Examples 3, 7, and 9, which was made of SUS with a melting point as high as 1,400°C and a heat capacity greater than or equal to 6.5 J/K did not melt, and no temperature rise of the refrigerant was observed outside the mesh member M, and further, no soot was observed on the inner peripheral face of the pressure-resistant container P, which demonstrates that the propagation of the disproportionation reaction was suppressed.

When Test Examples 3 and 6 are compared, for example, both the mesh members M were made of SUS with a melting point of 1,400°C and had a diameter of 13 mm. However, the propagation of a disproportionation reaction was not suppressed in Test Example 6, while the propagation of a disproportionation reaction was suppressed in Test Example 3 (this is also true of the relationship between Test Examples 9 and 1 and the relationship between Test Examples 7 and 5, for example). This demonstrates that the diameter of the mesh member M is not related to the suppression of the propagation of a disproportionation reaction.

In the compressor 21 of the refrigeration cycle apparatus 1 of the present embodiment, occurrence conditions of a disproportionation reaction are likely to be met around the electrical contact between the inner pins 98b of the terminal portion 98 and the cluster 96, around the coil 86a, around the upper bearing portion 91a, and around the lower bearing portion 93a, for example. Thus, a disproportionation reaction may occur around such portions. Specifically, energy needed for ignition is likely to be generated at the electrical contact between the inner pins 98b of the terminal portion 98 and the cluster 96. In the region around the coil 86a, energy needed for ignition is likely to be generated due to a current flow therethrough when an insulating film for an electric wire has a production defect generated during the production of the coil 86a or when the insulating film has peeled off due to contact with something. In each of the region around the upper bearing portion 91a and the region around the lower bearing portion 93a, energy needed for ignition is likely to be generated on the sliding surface between the portion and the crankshaft 84 due to friction while the compressor 21 is driven.

In contrast, as the refrigeration cycle apparatus 1 including the compressor 21 of the present embodiment is provided with the first heat absorbing member 51 to the fifth heat absorbing member 55 each having a melting point greater than or equal to 1,000°C and a heat capacity greater than or equal to 6.5 J/K, it is possible to, even when a disproportionation reaction has occurred around any of the foregoing portions, suppress the propagation of the disproportionation reaction. Specifically, even when a disproportionation reaction has occurred around the electrical contact between the inner pins 98b of the terminal portion 98 and the cluster 96, the first heat absorbing member 51 absorbs the generated heat. This suppresses an excessive temperature rise of the refrigerant, and thus suppresses the propagation of the disproportionation reaction. In addition, even when a disproportionation reaction has occurred around the coil 86a, the second heat absorbing member 52 and the third heat absorbing member 53 absorb the generated heat. This suppresses an excessive temperature rise of the refrigerant, and thus suppresses the propagation of the disproportionation reaction. In addition, even when a disproportionation reaction has occurred around the upper bearing portion 91a, the fourth heat absorbing member 54 absorbs the generated heat. This suppresses an excessive temperature rise of the refrigerant, and thus suppresses the propagation of the disproportionation reaction. Further, even when a disproportionation reaction has occurred around the lower bearing portion 93a, the fifth heat absorbing member 55 absorbs the generated heat. This suppresses an excessive temperature rise of the refrigerant, and thus suppresses the propagation of the disproportionation reaction.

### (9) Other embodiments

### (9-1) Another embodiment A

The foregoing embodiment has exemplarily illustrated a case where the first heat absorbing member 51 to the fifth heat absorbing member 55 are disposed around the portions where a disproportionation reaction is likely to occur in the compressor 21.

In contrast, the portions where a disproportionation reaction of a refrigerant may occur in the refrigeration cycle apparatus 1 are not limited thereto. For example, a heat absorbing member with a melting point greater than or equal to 1,000°C and a heat capacity greater than or equal to 6.5 J/K may be disposed around a portion including a movable portion and/or an electric portion. Examples of elements including such a movable portion and/or an electric portion include the expansion valve 24 and the four-way switching valve 22.

The foregoing embodiment has exemplarily illustrated a case where the heat absorbing members used for absorbing heat are separately provided around the portions where a disproportionation reaction is likely to occur. However, the present disclosure is not limited to such a case where the heat absorbing members used for absorbing heat are separately provided. For example, when a member partially forming the device, such as the compressor 21, the expansion valve 24, or the four-way switching valve 22, and located around a portion where a disproportionation reaction is likely to occur has a melting point greater than or equal to 1,000°C and a heat capacity greater than or equal to 6.5 J/K, such a member may be used to absorb heat. Examples of such a member partially forming the device include the casing 81 of the compressor 21 and the valve elements of the expansion valve 24 and the four-way switching valve 22.

Although the foregoing embodiment has exemplarily illustrated a case where each of the first heat absorbing member 51 to the fifth heat absorbing member 55 is a single member, it is possible to, when an aggregate of a plurality of heat absorbing members each having a melting point greater than or equal to 1,000°C together achieve a heat capacity greater than or equal to 6.5 J/K, suppress the propagation of a disproportionation reaction using such an aggregate.

### (9-2) Another embodiment B

The foregoing embodiment has exemplarily illustrated a member with a melting point greater than or equal to 1,000°C and a heat capacity greater than or equal to 6.5J/K as each of the first heat absorbing member 51 to the fifth heat absorbing member 55.

In contrast, the heat absorbing members are not limited thereto, and from the perspective of more effectively suppressing the propagation of a disproportionation reaction, each heat absorbing member may be a member in which the heat capacity of a portion with a melting point greater than or equal to 1,000°C is greater than or equal to 6.7 J/K, or a member in which the heat capacity of a portion with a melting point greater than or equal to 1,200°C is greater than or equal to 6.5 J/K, for example. It is more preferable that the heat capacity of the portion with a melting point greater than or equal to 1,200°C be greater than or equal to 6.7 J/K. Further, each heat absorbing member is preferably a member in which the heat capacity of a portion with a melting point greater than or equal to 1,400°C is greater than or equal to 6.5 J/K, and further preferably, the heat capacity of the portion with a melting point greater than or equal to 1,400°C is greater than or equal to 6.7 J/K.

### (9-3) Another embodiment C

The foregoing embodiment has exemplarily illustrated a case where a rotary compressor is used as the compressor 21.

In contrast, the compressor for suppressing the propagation of a disproportionation reaction by using heat absorbing members is not limited to a rotary compressor, and may be a known scroll compressor or swing compressor.

### (Supplement)

Although the embodiments of the present disclosure have been described above, it is to be understood that various changes to the forms or details are possible without departing from the spirit or scope of the present disclosure recited in the claims.

### REFERENCE SIGNS LIST

1 Refrigeration cycle apparatus
5 Gas-side refrigerant communication pipe (refrigerant pipe)
6 Liquid-side refrigerant communication pipe (refrigerant pipe)
10 Refrigerant circuit
11 to 19 First to ninth refrigerant pipes (refrigerant pipes)
21 Compressor (device)
51 First heat absorbing member (heat absorbing portion)
52 Second heat absorbing member (heat absorbing portion)
53 Third heat absorbing member (heat absorbing portion)
54 Fourth heat absorbing member (heat absorbing portion)
55 Fifth heat absorbing member (heat absorbing portion)

### CITATION LIST

### PATENT LITERATURE

[Patent Literature 1] Japanese Patent Laid-Open No. 2019-196312

## Claims

1. Use of a composition as a refrigerant in a device (21),
wherein:
the composition comprises one or more compounds selected from the group consisting of ethylene-based fluoroolefins, 2,3,3,3-tetrafluoropropene (HFO-1234yf), and 1,3,3,3-tetrafluoropropene (HFO-1234ze),
the device (21) forms a refrigerant circuit (10) together with a refrigerant pipe (11 to 19, 5, 6), and
the device (21) includes a heat absorbing portion (51, 52, 53, 54, 55) in which a heat capacity of a portion with a melting point greater than or equal to 1,000°C is greater than or equal to 6.5 J/K.

2. The use according to claim 1, wherein the composition comprises one or more compounds selected from the group consisting of 1,2-difluoroethylene (HFO-1132), 1,1-difluoroethylene (HFO-1132a), 1,1,2-trifluoroethylene (HFO-1123), monofluoroethylene (HFO-1141), and perhaloolefins.

3. The use according to claim 2, wherein the composition comprises 1,2-difluoroethylene (HFO-1132) and/or 1,1,2-trifluoroethylene (HFO-1123).

4. A device (21) for using a composition as a refrigerant,
wherein:
the composition comprises one or more compounds selected from the group consisting of ethylene-based fluoroolefins, 2,3,3,3-tetrafluoropropene (HFO-1234yf), and 1,3,3,3-tetrafluoropropene (HFO-1234ze),
the device (21) forms a refrigerant circuit (10) together with a refrigerant pipe (11 to 19, 5, 6), and
the device (21) includes a heat absorbing portion (51, 52, 53, 54, 55) in which a heat capacity of a portion with a melting point greater than or equal to 1,000°C is greater than or equal to 6.5 J/K.

5. A refrigeration cycle apparatus (1) comprising the refrigerant circuit (10), the refrigerant circuit (10) including the device (21) of claim 4 and the refrigerant pipe (11 to 19, 5, 6).
